# EUROPÄISCHE PATENTANMELDUNG

(11) **EP 1 108 676 A1**
(43) Veröffentlichungstag der Anmeldung: **20.06.2001**
(21) Anmeldenummer: 00113834.6
(22) Anmeldetag: 30.06.2000
(51) Int. Cl.: B67D 1/00, E03B 7/07, E03C 1/04, B67D 1/08

(54) **Zusatzaggregat für eine Spüle, insbesondere Küchenspüle**

(30) Priorität: 14.12.1999 DE 19960149
(71) Anmelder: STADTWERKE DUSSELDORF AG., D-40215 Düsseldorf (DE)
(72) Erfinder: Irmscher,Rudolf Dipl.-Ing.rer.nat., 52353 Düren (DE); Oesterwind, Dieter Dipl.-Ing.Dr.rer. pol., 52428 Jülich (DE)
(74) Vertreter: Bergen, Klaus, Dipl.-Ing.

(57) **Zusammenfassung**

Die Erfindung betrifft ein Zusatzaggregat für eine Spüle (1), insbesondere für eine Küchenspüle, mit mindestens einem Wasserzulauf (5, 6) für Kalt- und Warmwasser (Trinkwasser) (K, W), mindestens einer Ausgabeeinheit (3) für das Kalt- und Warmwasser (Trinkwasser) (K, W), einem Becken (2) und einem Abfluß (4). Um eine besonders einfache Handhabung karbonisierten Trinkwassers zu gewährleisten, ist erfindungsgemäß vorgesehen, daß in die Spüle (1) eine Aufbereitungs- und Abgabestation (7) für karbonisiertes Trinkwasser (C) integriert ist.

## Beschreibung

Die Erfindung bezieht sich auf ein Zusatzaggregat für eine Spüle, insbesondere für eine Küchenspüle, mit:
- mindestens einem Wasserzulauf für Kalt- und Warmwasser (Trinkwasser),
- mindestens einer Ausgabeeinheit für das Kalt- und Warmwasser (Trinkwasser),
- einem Becken und
- einem Abfluß.

Küchenspülen der genannten Art finden sich in jedem Haushalt. In jüngster Zeit ist ein erhöhter Bedarf dafür aufgetreten, karbonisiertes Trinkwasser (Tafelwasser) selbst herzustellen. Im Rahmen dieser Patentanmeldung ist unter karbonisiertem Trinkwasser solches Trinkwasser zu verstehen, das insbesondere mit CO₂ angereichert ist.

Es sind für den Endverbraucher Karbonisierungseinrichtungen am Markt, mit denen flaschenweise ein CO₂-Eintrag im Haushalt vorgenommen werden kann. Hierzu kommen im Handel verfügbare CO₂-Flaschen zur Anwendung, die in das Karbonisierungsgerät eingesetzt werden. Bei den bekannten Geräten handelt es sich um Lanzenkarbonisierungsgeräte, bei denen jedoch die Handhabung insofern relativ umständlich ist, als in speziellen Behältern Trinkwasser portionsweise zu karbonisieren ist. Zur Erhöhung der Löslichkeit von CO₂ in Trinkwasser muß das zu karbonisierende Trinkwasser portionsweise (flaschenweise) im Kühlschrank vorgekühlt werden.

In der EP 0 802 155 A1 werden zur Abhilfe dieser Nachteile ein Verfahren und eine entsprechende Vorrichtung vorgeschlagen, mit dem bzw. mit der direkt im Durchlaufverfahren karbonisiertes Trinkwasser hergestellt werden kann. Auch die Kühlung des zu karbonisierenden Wassers wird dort verfahrensgemäß vorgesehen bzw. in der vorgeschlagenen Vorrichtung durchgeführt.

Der vorliegenden Erfindung liegt die **Aufgabe** zugrunde, eine vorteilhafte Vorrichtung vorzuschlagen, mit der karbonisiertes Trinkwasser kontinuierlich hergestellt und ausgegeben werden kann, wobei besondere Rücksicht auf eine praxisoptimale Verwendung genommen werden soll. Des weiteren soll eine Lösung vorgeschlagen werden, mit der durch bekannte Karbonisierungsvorrichtungen hergestelltes Trinkwasser an spezifische Wünsche des Konsumenten angepaßt werden kann. Das Wasser soll also in einfacher Weise handhabbar und des weiteren hinsichtlich seines CO₂-Gehalts den geschmacklichen Bedürfnissen des Verbrauchers einfach anpaßbar sein.

Die **Lösung** dieser Aufgabe durch die Erfindung ist dadurch gekennzeichnet, daß in die Spüle eine Aufbereitungs- und Abgabestation für karbonisiertes Trinkwasser integriert ist.

Damit wird erreicht, daß für den Verbraucher ohne großen Aufwand im Küchenspülenbereich eine Entnahme von karbonisiertem Trinkwasser vorgenommen werden kann.

Bevorzugt ist vorgesehen, daß die Aufbereitungs- und Abgabestation für karbonisiertes Trinkwasser eine Ausgabeeinheit umfaßt, die die Abgabe des karbonisierten Trinkwassers in den Bereich des Beckens ermöglicht. Damit ist in einfacher Weise sichergestellt, daß es beim Zapfen und Handhaben des Wassers keine Probleme mit verschüttetem Wasser gibt, da dieses direkt in das Becken läuft.

Nach einem weiteren Merkmal der Erfindung weist die Aufbereitungsund Abgabestation für karbonisiertes Trinkwasser ein Karbonisierungsgerät auf. Hier kann sowohl ein im Durchlaufverfahren arbeitendes als auch ein im intermittierenden Betrieb arbeitendes Karbonisierungsgerät zum Einsatz kommen.

Die Spüle weist vorteilhafterweise eine Ausgabeeinheit für Kalt- und Warmwasser auf, in die die Abgabeeinheit für karbonisiertes Trinkwasser integriert ist.

Sehr vorteilhaft ist es, wenn vorgesehen wird, daß die Abgabeleitung für karbonisiertes Trinkwasser mit einem Mischelement in Verbindung steht, mit dem dem karbonisierten Trinkwasser vorzugsweise kaltes nicht karbonisiertes Trinkwasser zugemischt werden kann. Damit kann erreicht werden, daß der C02-Gehalt im karbonisierten Trinkwasser an die individuellen Bedürfnisse des Verbrauchers anpaßbar ist: Dem karbonisierten Trinkwasser wird soviel nicht karbonisiertes Trinkwasser zugemischt, bis der gewünschte Karbonisierungsgrad erreicht ist. Mit steigender Menge zugemischten, nicht karbonisierten Trinkwassers sinkt der CO₂-Gehalt im karbonisierten Trinkwasser entsprechend.

Weiterhin kann vorgesehen werden, daß die Wasser-Ausgabeeinheit einen Zulauf für Kaltwasser und einen Zulauf für Warmwasser aufweist sowie ein Mischelement zur Mischung des Kalt- und Warmwassers. In diesem Zusammenhang ist es vorteilhaft, wenn das Mischelement für die Mischung von karbonisierten Trinkwasser mit nicht karbonisiertem Trinkwasser und das Mischelement für die Mischung von Kaltwasser und Warmwasser in dieselbe Ausgabeeinheit münden.

Eine vorteilhafte Ausgestaltung ergibt sich des weiteren dann, wenn die Zuführleitung für Kaltwasser eine Verzweigung aufweist, von der Kaltwasser sowohl in ein Mischelement für die Mischung von karbonisiertem Trinkwasser mit Kaltwasser als auch in ein Mischelement für die Mischung von Kaltwasser mit Warmwasser geleitet wird.

Die Qualität des karbonisierten Trinkwassers wird verbessert, wenn in der erfindungsgemäßen Spüle Kühlaggregate angeordnet sind, mit denen das karbonisierte Trinkwasser vor, während und/oder nach dem Karbonisieren gekühlt werden kann. Bei dem Kühlaggregat kann es sich sowohl um eine Kompressionskühlanlage als auch eine Peltierkühlanlage handeln. Im Falle einer Peltierkühlanlage kann vorgesehen werden, daß ein Teil des zu karbonisierenden Trinkwassers im by-pass als Kühlwasser durch die Peltierkühlanlage geführt wird.

Dem einfachen Aufbau der erfindungsgemäßen Anordnung kommt eine besondere Bedeutung zu. Um diesen sicherzustellen, kann vorgesehen werden, daß die einzelnen Funktionselemente der Spüle einen modularen Aufbau aufweisen.

In der Zeichnung ist ein Ausführungsbeispiel der Erfindung dargestellt. Es zeigen:
- Fig.1: schematisch den Schnitt durch eine Küchenspüle, die mit einem Karbonisierungsgerät ausgestattet ist;
- Fig.2: schematisch das Leitungssystem der Wasserversorgung gemäß einer ersten Variante;
- Fig.3: eine zweite Variante des Leitungssystems der Wasserversorgung dar; und
- Fig. 4: eine Prinzipskizze eines Karbonisierungsgeräts.

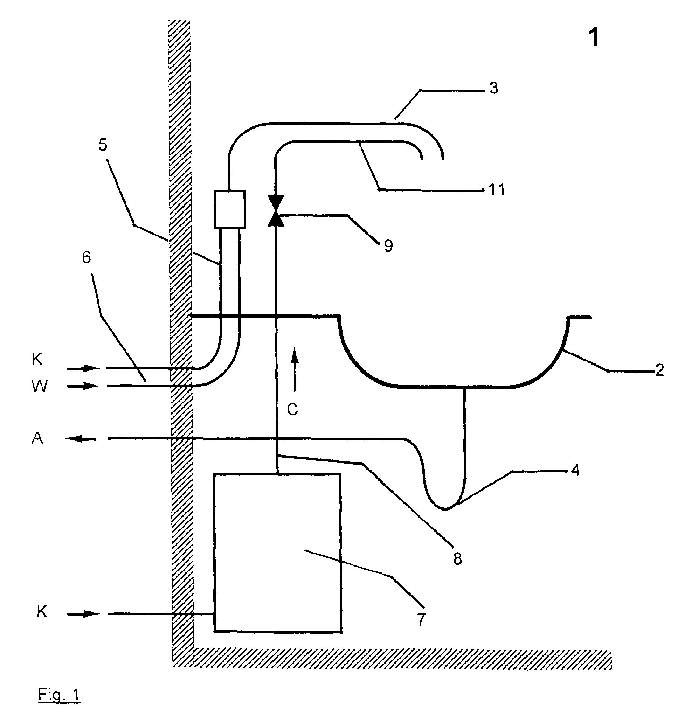

In Fig. 1 ist eine Küchenspüle 1 dargestellt, die in bekannter Weise ein Becken 2 und eine Wasserarmatur 3 als Ausgabeeinheit für Wasser aufweist. Über die Wasserarmatur 3 gelangt Kalt- und Warmwasser K und W in das Becken. Ein Abfluß 4 sorgt für den Abfluß von Abwasser A aus dem Becken 2. Die Versorgung mit Kalt- bzw. Warmwasser K bzw. W erfolgt über die jeweiligen Leitungen 5 und 6.

Die Spüle 1 soll sich auch zur Ausgabe von karbonisiertem Trinkwasser C eignen. Zu diesem Zweck ist in die Spüle 1 ein Karbonisierungsgerät 7 modulartig integriert, das als Untertischgerät ausgebildet ist. Das Karbonisierungsgerät 7 wird mit Kaltwasser (Trinkwasser) K versorgt, versetzt es mit Kohlendioxid CO₂ und gibt es als karbonisiertes Trinkwasser C über die Leitung 8 wieder ab. Über ein Ventil 9 kann das karbonisierte Trinkwasser C entweder über eine separate Armatur 11 oder direkt über den Wasserhahn 3 abgegeben werden. Wesentlich ist dabei, daß das karbonisierte Trinkwasser C derart die Armatur 11 bzw. den Wasserhahn 3 verläßt, daß es - bei nicht ordnungsgemäßem Zapfen - in das Becken 2 fließt und somit über den Abfluß 4 entsorgt werden kann. Damit ergibt sich eine sehr einfache und leichte Handhabung des karbonisierten Trinkwassers C.

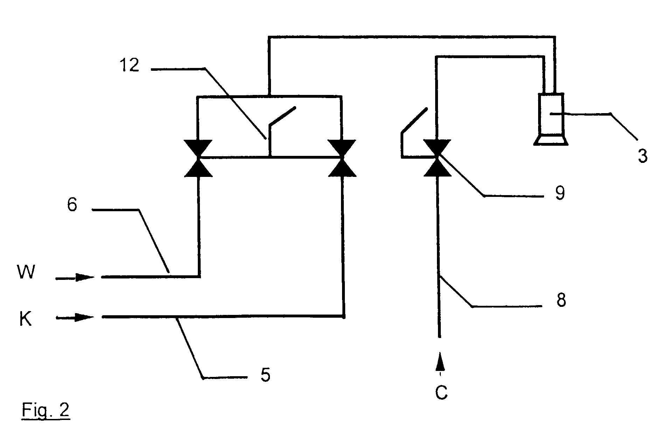

Das Leitungssystem für die Wasserversorgung ist in Fig. 2 skizziert. Es korrespondiert mit der in Fig. 1 dargestellten Lösung. Über die Leitungen 5 für Kaltwasser K und 6 für Warmwasser W gelangt das Wasser zu einem Mischelement 12, in dem in bekannter Weise Kalt- und Warmwasser so gemischt werden, daß das Wasser die gewünschte Temperatur hat. Über das Ventil 9 wird der Zufluß von karbonisiertem Trinkwasser C gesteuert, das über die Leitung 8 zugeführt wird. Im skizzierten Falle wird sowohl das gemischte Wasser K, W als auch das karbonisierte Trinkwasser C über eine gemeinsame Armatur 3 abgegeben.

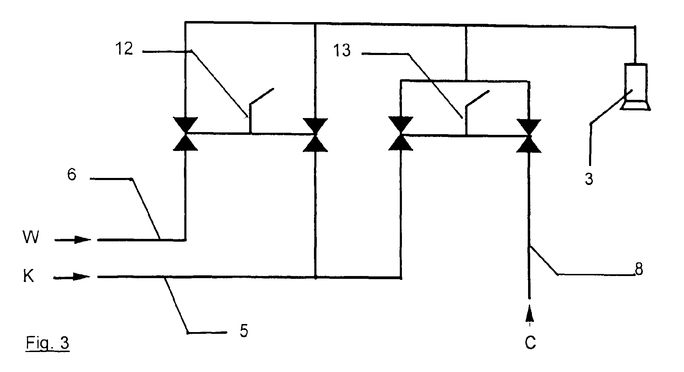

In Fig. 3 ist eine Variante für das Leitungssystem der Wasserleitungen skizziert, das einen besonders vorteilhaften Gebrauch der Spüle ermöglicht. Wie in Fig. 2 befindet sich im linken Bereich der Figur 3 die Mischbatterie 12 für Kalt- und Warmwasser, d. h. über die Leitungen 5 für Kaltwasser K und 6 für Warmwasser W wird Wasser dem Mischelement 12 zugeleitet.

Im dargestellten Fall wird nunmehr jedoch ein weiteres Mischelement 13 eingesetzt, wobei diesem einmal das karbonisierte Trinkwasser C über die Leitung 8 und einmal Kaltwasser K über die Leitung 5 zugeleitet wird.

Damit wird es in vorteilhafter Weise möglich, dem vorzugsweise mit Kohlendioxid angereicherten karbonisierten Trinkwasser C Kaltwasser K in einer solchen Menge zuzudosieren, wie es dem Geschmack des Verbrauchers entspricht. Ohne Zumischung von Kaltwasser (Trinkwasser) K ist das karbonisierte Trinkwasser C "prickelnd", während es mit steigender Zugabe von nicht karbonisiertem Trinkwasser "still" wird.

Bevorzugt sind beide Mischelemente 12 und 13 in eine Armatur integriert, so daß die jeweilige Einstellung - nicht nur der Wassertemperatur des Kalt- und Warmwassergemisches, sondern auch des Kohlendioxidgehalts des karbonisierten Trinkwassers - in einfacher Weise möglich ist.

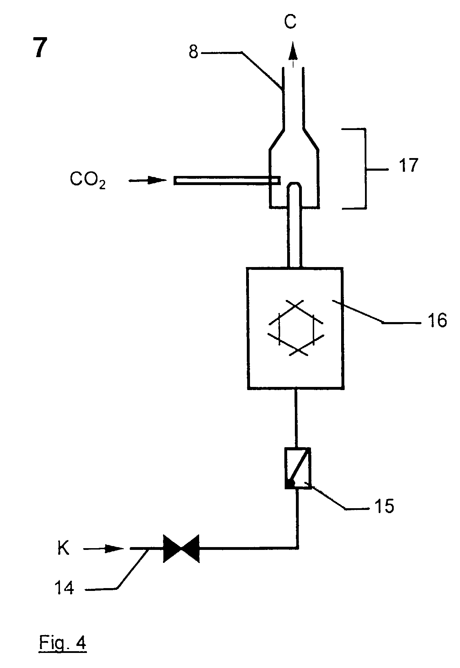

In Fig. 4 ist der schematische Aufbau eines Karbonisierungsgeräts 7 zu sehen. Kaltwasser K gelangt über eine Leitung 14 mit einem nicht näher bezeichneten Absperrventil über ein Rückschlagventil 15 in ein Kühlaggregat 16. Bei dem Kühlgerät handelt es sich bevorzugt um eine Kompressionskühlanlage oder um eine Peltierkühlanlage.

Das gekühlte Wasser gelangt anschließend in den Karbonisator 17, in dem das Wasser mit Kohlendioxid angereichert wird. Das karbonisierte Trinkwasser C gelangt schließlich über die Leitung 8 ins entsprechende Leitungsnetz gemäß Fig. 2 oder 3.

Nähere Einzelheiten zur Karbonisierung des Trinkwassers sind insbesondere aus der EP 0 802 155 A1 bekannt, auf die diesbezüglich verwiesen wird.

## Patentansprüche

1. Zusatzaggregat für eine Spüle (1), insbesondere für eine Küchenspüle, mit:
- mindestens einem Wasserzulauf (5, 6) für Kalt- und Warmwasser (K, W),
- mindestens einer Ausgabeeinheit (3) für das Kalt- und Warmwasser (K, W),
- einem Becken (2) und
- einem Abfluß (4),
**dadurch gekennzeichnet**,
daß in die Spüle (1) eine Aufbereitungs- und Abgabestation (7) für karbonisiertes Trinkwasser (C) integriert ist.

2. Aggregat nach Anspruch 1, **dadurch gekennzeichnet**, daß die Aufbereitungs- und Abgabestation (7) für karbonisiertes Trinkwasser (C) eine Ausgabeeinheit (11, 3) umfaßt, die die Abgabe des karbonisierten Trinkwassers (C) in den Bereich des Beckens (2) ermöglicht.

3. Aggregat nach Anspruch 1 oder Anspruch 2, **dadurch gekennzeichnet**, daß die Aufbereitungs- und Abgabestation (7) für karbonisiertes Trinkwasser (C) ein Karbonisierungsgerät aufweist.

4. Aggregat nach Anspruch 3, **dadurch gekennzeichnet**, daß das Karbonisierungsgerät (7) als im Durchlaufverfahren arbeitendes Gerät ausgebildet ist.

5. Aggregat nach Anspruch 3, **dadurch gekennzeichnet**, daß das Karbonisierungsgerät (7) als im intermittierenden Betrieb arbeitendes Gerät ausgebildet ist.

6. Aggregat nach einem der Ansprüche 1 bis 5, **dadurch gekennzeichnet**, daß die Spüle (1) eine Ausgabeeinheit (3) für Kalt- und Warmwasser (K, W) aufweist, in die die Abgabeeinheit (11) für karbonisiertes Trinkwasser (C) integriert ist.

7. Aggregat nach einem der Ansprüche 1 bis 5, **dadurch gekennzeichnet**, daß die Spüle (1) eine Ausgabeeinheit (3) für Kalt- und Warmwasser (K, W) und eine eigenständige Abgabeeinheit (11) für karbonisiertes Trinkwasser (C) aufweist.

8. Aggregat nach einem der Ansprüche 1 bis 7, **dadurch gekennzeichnet**, daß die Abgabeleitung (8) für karbonisiertes Trinkwasser (C) mit einem Mischelement (13) in Verbindung steht, mit dem dem karbonisierten Trinkwasser (C) nicht karbonisiertes Trinkwasser (K) zugemischt werden kann.

9. Aggregat nach einem der Ansprüche 1 bis 8, **dadurch gekennzeichnet**, daß die Ausgabeeinheit (3) für Kalt- und Warmwasser (K, W) einen Zulauf für Kaltwasser (K) und einen Zulauf für Warmwasser (W) aufweist sowie ein Mischelement (12) zur Mischung des Kalt- und Warmwassers.

10. Aggregat nach Anspruch 9, **dadurch gekennzeichnet**, daß das Mischelement (13) für die Mischung von karbonisiertem Trinkwasser (C) mit Kaltwasser (K) und das Mischelement (12) für die Mischung von Kalt- und Warmwasser (K, W) in dieselbe Ausgabeeinheit (3) münden.

11. Aggregat nach einem der Ansprüche 8 bis 10, **dadurch gekennzeichnet**, daß die Zuführleitung (5) für Kaltwasser (K) eine Verzweigung aufweist, von der Kaltwasser (K) sowohl in das Mischelement (13) für die Mischung von karbonisiertem Trinkwasser (C) mit Kaltwasser (K) als auch in das Mischelement (12) für die Mischung von Kaltwasser (K) mit Warmwasser (W) geleitet wird.

12. Aggregat nach einem der Ansprüche 1 bis 11, **dadurch gekennzeichnet**, daß ein oder mehrere Kühlaggregate (16) angeordnet sind, mit denen das karbonisierte Trinkwasser (C) vor, während und/oder nach dem Karbonisieren gekühlt werden kann.

13. Aggregat nach Anspruch 12, **dadurch gekennzeichnet**, daß die das Kühlaggregat (16) eine Kompressionskühlanlage ist.

14. Aggregat nach Anspruch 12, **dadurch gekennzeichnet**, daß die das Kühlaggregat (16) eine Peltierkühlanlage ist.

15. Aggregat nach Anspruch 14, **dadurch gekennzeichnet**, daß ein Teil des zu karbonisierenden Trinkwassers (C) im by-pass als Kühlwasser durch die Peltierkühlanlage geführt wird.

16. Aggregat nach einem der Ansprüche 1 bis 15, **dadurch gekennzeichnet**, daß zum CO₂-Eintrag ein Karbonisator (17) vorgesehen ist, der von einer CO₂-Quelle gespeist wird.

17. Aggregat nach einem der Ansprüche 1 bis 16, **dadurch gekennzeichnet**, daß zum CO₂-Eintrag ein Karbonisierungsgerät mit einem intermittierenden Karbonisierverfahren eingesetzt wird.

18. Aggregat nach einem der Ansprüche 1 bis 17, **dadurch gekennzeichnet**, daß die einzelnen Funktionselemente der Spüle (1) einen modularen Aufbau aufweisen.

19. Aggregat nach Anspruch 18, **dadurch gekennzeichnet**, daß das Kühlaggregat (16) als Modul-Baueinheit ausgebildet ist.
